# EUROPEAN PATENT APPLICATION

(11) **EP 4 704 351 A1**
(43) Date of publication of application: **04.03.2026**
(21) Application number: 25184813.1
(22) Date of filing: 24.06.2025
(51) Int. Cl.: H04B 7/0456, H04L 5/00, H04L 25/02

(54) **METHOD AND APPARATUS FOR IMPROVING CHANNEL ESTIMATION**

(30) Priority: 03.09.2024 KR 20240119563
(71) Applicant: Samsung Electronics Co., Ltd., Suwon-si, Gyeonggi-do 16677 (KR)
(72) Inventor: OH, Jinwoo, 16677 Suwon-si (KR); KIM, Jinho, 16677 Suwon-si (KR)
(74) Representative: Marks & Clerk LLP

(57) **Abstract**

An electronic device includes a communication circuit that receives a physical channel from a base station, a memory, and a processor that determines whether a precoding maintenance signal is received from the base station, and based on a determination that the precoding maintenance signal is not received, transmits a precoding change restriction request to the base station. The precoding change restriction request corresponds to a request to maintain a precoding matrix applied by the base station for a certain interval.

## Description

### BACKGROUND

### 1. Field

The disclosure relates to a method and apparatus in a wireless communication system. More specifically, the disclosure relates to a method of and apparatus for improving channel estimation in a wireless communication system.

### 2. Description of Related Art

In a new radio (NR) communication environment, a base station uses precoding techniques in order to support multi-layer transmission. The base station precoding may be changed for each slot and is transparent to a terminal, and thus, the terminal is unaware of information about the base station precoding.

When a terminal uses demodulation reference signals (DMRSs) of adjacent slots, the channel estimation performance may be improved. However, when precoding is different between the adjacent slots, the DMRSs of the adjacent slots may not be used. That is, adjacent DMRSs may be used only when precoding is the same between the adjacent slots, but the base station does not inform the terminal that the precoding between the adjacent slots is changed. To solve this problem, a method used by a terminal to detect whether there is a precoding change between adjacent slots has been proposed. However, when the base station changes the precoding for each slot, the DMRSs in the adjacent slots may still not be used.

### SUMMARY

Aspects of the disclosure provide a method and apparatus for improving channel estimation based on ensuring the same precoding matrix between slots.

According to an aspect of the disclosure, there is provided an electronic device including: a communication circuit configured to receive a physical channel from a base station; a memory storing at least one instruction; and at least one processor, wherein when executed by the at least one processor, the at least one instruction is configured to control the electronic device to: determine whether a precoding maintenance signal is received from the base station, and based on a determination that the precoding maintenance signal is not received, transmit a precoding change restriction request to the base station, wherein the precoding change restriction request corresponds to a request to maintain a precoding matrix applied by the base station for a first interval.

According to another aspect of the disclosure, there is provided an operating method of an electronic device, the operating method including: determining whether a precoding maintenance signal is received from a base station; and transmitting a precoding change restriction request to the base station based on a determination that the precoding maintenance signal is not received, wherein the precoding change restriction request corresponds to a request to maintain a precoding matrix applied by the base station for a first interval.

According to another aspect of the disclosure, there is provided a base station including: a communication circuit configured to transmit a physical channel to an electronic device; a memory storing at least one instruction; and at least one processor, wherein when executed by the at least one processor, the at least one instruction is configured to control the electronic device to: transmit a precoding change restriction to the electronic device, and transmit a downlink signal based on a precoding matrix during a precoding maintenance interval based on the precoding change restriction, wherein the precoding change restriction corresponds to maintaining the precoding matrix applied by the base station for a first interval. According to an aspect, there is provided an electronic device (120; 300) comprising: a communication circuit (310) configured to receive a physical channel from a base station (110; 200); a memory (230) storing at least one instruction; and at least one processor (240), wherein when executed by the at least one processor (240), the at least one instruction is configured to control the electronic device (120; 200) to: receive from the base station (110; 200) a precoding change restriction, wherein the precoding change restriction corresponds to maintaining the precoding matrix applied by the base station (110; 300) for a first interval; receive from the base station (110; 200), a downlink signal based on the precoding matrix during the first interval based on the precoding change restriction; and based on the precoding change restriction, perform channel estimation for a current slot (which may be referred to as a 'first slot') transmitted during the precoding maintenance interval based on demodulation reference signals (DMRS) belonging to a further slot adjacent to the first slot and also transmitted during the first interval.

According to an aspect, there is provided a base station (110; 200) comprising: a communication circuit (210) configured to transmit a physical channel to an electronic device (120; 300); a memory (230) storing at least one instruction; and at least one processor (240), wherein when executed by the at least one processor (240), the at least one instruction is configured to control the base station (110; 200) to: transmit a precoding change restriction to the electronic device (120; 300), and transmit a downlink signal based on a precoding matrix during a precoding maintenance interval based on the precoding change restriction, wherein the precoding change restriction corresponds to maintaining the precoding matrix applied by the base station (110; 300) for a first interval.

The following features may apply to any of the above described aspects.

The physical channel sent from the base station to the electronic device comprises a plurality of slots, each of which comprises at least one DMRS. When executed by the at least one processor, the at least one instruction is configured to control the electronic device to perform channel estimation for each slot based on the at least one DMRS in that slot. When executed by the at least one processor, the at least one instruction is configured to control the electronic device to, in response to determining that same precoding matrix is applied by the base station for a plurality of slots, perform channel estimation for each of at least some of those slots based on DMRS transmitted from the base station in respective adjacent slots. The electronic device may determine that the same precoding matrix is applied by the base station for the plurality of slots based on the transmission by the electronic device of the precoding change restriction request to the base station. Alternatively, the electronic device may determine that the same precoding matrix is applied by the base station for the plurality of slots based on receipt from the base station of a precoding change restriction or a precoding maintenance signal.

The precoding matrix may be applied by the base station to slots of the physical channel for the first interval.

The precoding change event may be an event indicating that the precoding matrix is to change.

The precoding change restriction request may comprise a length of a precoding change restriction interval. The precoding change restriction interval may be a length of an interval in which the precoding matrix is not changed.

The electronic device may be configured to, based on the precoding change restriction, perform channel estimation for a first slot transmitted during the precoding maintenance interval based on demodulation reference signals (DMRS) belonging to one or more further slots adjacent to the first slot and also transmitted during the precoding maintenance interval.

The first interval may be the same as the precoding maintenance interval.

At least some of the above and other features of the invention are set out in the claims.

### BRIEF DESCRIPTION OF DRAWINGS

Embodiments will be more clearly understood from the following detailed description taken in conjunction with the accompanying drawings in which:
FIG. 1 illustrates a wireless communication system according to an embodiment;
FIG. 2 is a block diagram of a base station according to an embodiment;
FIG. 3 is a block diagram of an electronic device according to an embodiment;
FIG. 4 illustrates a multiple input multiple output (MIMO) environment according to an embodiment;
FIG. 5 illustrates an example of channel estimation according to an embodiment;
FIG. 6 is a flowchart illustrating an operating method of a base station according to an embodiment;
FIG. 7 is a flowchart illustrating an operating method of a base station according to an embodiment;
FIG. 8 is a flowchart illustrating an operating method of a base station according to an embodiment;
FIG. 9 illustrates an example of a table for indicating precoding changes between adjacent slots according to an embodiment;
FIG. 10 is a flowchart illustrating an operating method of an electronic device according to an embodiment;
FIG. 11 is a flowchart illustrating an operating method of an electronic device according to an embodiment; and
FIG. 12 is a block diagram of a wireless communication device according to an embodiment.

### DETAILED DESCRIPTION

Hereinafter, embodiments are described in detail with reference to the accompanying drawings.

Below, embodiments of the disclosure will be described in detail and clearly to such an extent that an ordinary one in the art easily carries out the disclosure. As used herein, an expression "at least one of" preceding a list of elements modifies the entire list of the elements and does not modify the individual elements of the list. For example, an expression, "at least one of a, b, and c" should be understood as including only a, only b, only c, both a and b, both a and c, both b and c, or all of a, b, and c.

To clearly describe the disclosure, parts that are irrelevant to the description in the drawings are omitted, and like numerals refer to like or similar constituent elements throughout the specification.

Throughout this specification and the claims that follow, when it is described that an element is "coupled/connected" to another element, the element may be "directly coupled/connected" to the other element or "indirectly coupled/connected" to the other element through a third element. In addition, unless explicitly described to the contrary, the word "comprise" and variations such as "comprises" or "comprising" will be understood to imply the inclusion of stated elements but not the exclusion of any other elements.

According to one or more embodiments, various operations and/or functions described below may be implemented in a hardware approach. For example, according to some embodiments, the methods described below may be implemented by an electronic device configured to carry out a described operation(s) or function(s). The electronic device may include blocks, which may be referred to herein as managers, units, modules, hardware components, "~er" terms or the like, may be physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure. However, the disclosure is not limited thereto, and as such, the blocks, which may be referred to herein as managers, units, modules, or the like, may be software modules implemented by software codes, program codes, software instructions, or the like. The software modules may be executed on one or more processors. Reference in the specification to actions performed by the electronic device may, unless otherwise stated, be understood to be references to actions performed when the electronic device is controlled to perform those actions in response to at least one instruction being executed by the at least one processor of the electronic device. Reference in the specification to actions performed by the base station may, unless otherwise stated, be understood to be references to actions performed when the base station is controlled to perform those actions in response to at least one instruction being executed by the at least one processor of the base station.

According to one or more embodiments, various methods, operations and/or functions described below may be implemented or supported by artificial intelligence technology or one or more computer programs, each of which is configured with computer-readable program code and executed on a computer-readable medium. The term "computer-readable medium" includes any type of medium that may be accessed by a computer, such as read-only memory (ROM), random-access memory (RAM), a hard disk drive, a compact disc (CD), a digital video disc (DVD), or other types of memory. A "non-transitory" computer-readable medium excludes wired, wireless, optical, or other communication links that transmit transitory electrical signals or other signals. The non-transitory computer-readable medium includes a medium in which data can be permanently stored, and a medium in which data can be stored and later overwritten, such as a rewritable optical disk or an erasable memory device.

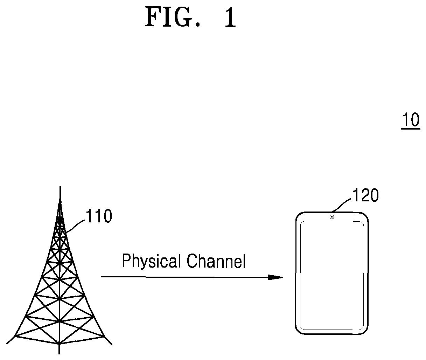

FIG. 1 illustrates a wireless communication system 10 according to an embodiment.

Referring to FIG. 1, the wireless communication system 10 may include a base station 110 and an electronic device 120. However, the disclosure is not limited thereto, and as such, according to an embodiment, the wireless communication system 10 may include a plurality of base stations and a plurality of electronic devices. According to various embodiments, the base station 110 may include a network infrastructure that provides wireless access to the electronic device 120. According to an embodiment, coverage of the base station 110 may be defined as a certain geographic region based on the distance over which signals are transmitted. The base station 110 may also be referred to as an access point (AP), an eNodeB (eNB), a 5th generation node (5G node), a wireless point, or other terms having technical meanings equivalent thereto.

According to various embodiments, the base station 110 may be connected to one or more transmission/reception points (TRPs). The base station 110 may transmit a downlink signal to or receive an uplink signal from the electronic device 120 via the one or more TRPs.

According to an embodiment, the base station 110 may transmit a physical channel to the electronic device 120. For example, the physical channel may include, but is not limited to, at least a physical downlink shared channel (PDSCH), a physical broadcast channel (PBCH), and a physical downlink control channel (PDCCH). The physical channel may include a reference signal (RS). The RS may be a demodulation RS (DMRS). The base station 110 may precode a transmission signal to be transmitted to the electronic device 120 and generate the physical channel corresponding to the transmission signal. The base station 110 may variably determine a precoding matrix to be applied to slots of the physical channel to be transmitted to the electronic device 120. For example, precoding matrices respectively applied to slots may be different, or the precoding matrices respectively applied to the slots may be the same.

According to an embodiment, the base station 110 may inform the electronic device 120 that the base station 110 will not change the precoding matrix. For example, the base station 110 may provide, to the electronic device 120, information about the precoding matrix to be applied to one or more slots in the physical channel. For example, the information may indicate whether the base station 110 will change the precoding matrix applied to the slots in the physical channel. For example, the information may indicate if and/or when the base station 110 will change the precoding matrix applied to the slots in the physical channel. For example, the base station 110 may provide the electronic device 120 with information that indicates that the length of an interval in which the precoding matrix is not changed or indicates that the precoding matrix will not be changed until a certain event occurs. Based on the information, the electronic device 120 may be guaranteed an interval in which the precoding matrix is not changed, and may improve channel estimation performance by interpolating the DMRS channel estimation results of adjacent slots during the interval. A detailed description thereof is provided below.

According to various embodiments, the electronic device 120 may include a device used by a user and communicating with the base station 110 via a wireless channel. In addition to the term 'terminal,' the electronic device 120 may be referred to as user equipment (UE), a mobile station, a subscriber station, customer premises equipment (CPE), a remote terminal, a wireless terminal, a user device, or other terms having technical meanings equivalent thereto.

According to an embodiment, the electronic device 120 may request (e.g. by sending a precoding change restriction request) to the base station 110 not to change the precoding matrix.

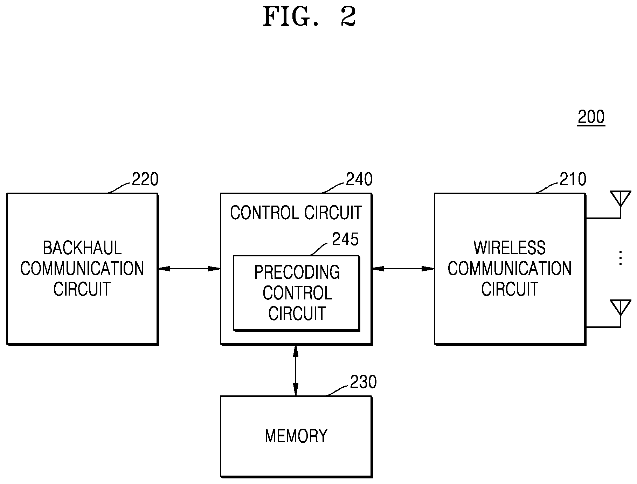

FIG. 2 is a block diagram of a base station 200 according to an embodiment.

Referring to FIG. 2, the base station 200 may include a wireless communication circuit 210, a backhaul communication circuit 220, a memory 230, and a control circuit 240. However, the disclosure is not limited thereto, and as such, according to another embodiment, the base station 200 may include one or more additional components, may omit or more components, or may include one or more components combined together. The base station 200 of FIG. 2 may correspond to the base station 110 in FIG. 1.

According to an embodiment, the wireless communication circuit 210 may perform functions of transmitting and receiving signals through a wireless channel. According to an embodiment, the wireless communication circuit 210 may perform a conversion function between a baseband signal and a bit string according to the physical layer standard of the communication system. In an example case in which data is transmitted, the wireless communication circuit 210 may generate complex symbols by encoding and modulating the transmitted bit string. In an example case in which data is received, the wireless communication circuit 210 may restore the received bit string by demodulating and decoding the baseband signal. In addition, the wireless communication circuit 210 may upconvert the baseband signal into a radio frequency (RF) band signal and then transmit the RF band signal through an antenna or may downconvert the RF band signal received through the antenna into a baseband signal. For example, the wireless communication circuit 210 may include a transmission filter, a reception filter, an amplifier, a mixer, an oscillator, a digital to analog convertor (DAC), an analog to digital convertor (ADC), etc.

The wireless communication circuit 210 may transmit and receive signals. For example, the wireless communication circuit 210 may transmit a synchronization signal (SS), an RS, system information, a message, control information, or data. **In** addition, the wireless communication circuit 210 may perform beamforming. The wireless communication circuit 210 may apply beamforming weights to signals to provide directionality to signals to be transmitted and received. The wireless communication circuit 210 may change the formed beam and transmit signals repeatedly.

The backhaul communication circuit 220 may provide an interface for communicating with other nodes in the communication network. For example, the backhaul communication circuit 220 may convert a bit string transmitted from the base station 200 to another node into a physical signal and may convert the physical signal received from another node into a bit string. The another node may include, but is not limited to, another access node, another base station, a higher node, a core network, etc.

The memory 230 may store data for operation of the base station 200. The data may include, but is not limited to, basic programs, application programs, program code, software instructions, and setting information. The memory 230 may include a volatile memory, a non-volatile memory, or a combination of the volatile memory and the non-volatile memory.

The control circuit 240 may control the operations of the base station 200. For example, the control circuit 240 transmits and receives signals through the wireless communication circuit 210 or the backhaul communication circuit 220. Also, the control circuit 240 may write data to and read data from the memory 230. For example, the control circuit 240 may include at least one processor.

According to an embodiment, the control circuit 240 may further include a precoding control circuit 245. The precoding control circuit 245 may determine a precoding matrix applied to a transmission signal transmitted to an electronic device (e.g., the electronic device 120 in FIG. 1).

**In** related art cases, a control circuit according to a comparative example may variably set the precoding matrix based on a channel environment. For example, a precoding control circuit may change the precoding matrix for each slot. Because a precoding matrix may be changed for each slot and a base station does not inform an electronic device whether the precoding matrix is changed, an electronic device according to the comparative example has a disadvantage in that it may improve channel estimation performance by interpolating the channel estimation results of the DMRS only after identifying whether the precoding matrix is the same between adjacent slots.

According to an embodiment, the precoding control circuit 245 may determine whether to maintain precoding. According to an embodiment, maintain precoding may be referred to as precoding maintenance. For example, precoding maintenance may correspond to not changing the precoding matrix applied to the transmission signal over a certain interval. The precoding maintenance may also be referred to as precoding change restriction. The precoding control circuit 245 may guarantee the electronic device 120 an interval in which the precoding matrix is the same between adjacent slots by signaling a certain event or the length of a precoding maintenance interval.

For example, the precoding control circuit 245 of the base station 200 may instruct the electronic device 120 on the length (e.g., a certain number of slots, sub-frames, frames, etc.) of an interval (or a precoding change restriction interval) in which the precoding matrix is not changed. **In** this case, the electronic device 120 may determine that the precoding matrix will remain the same for the length of the interval received from the base station 200.

According to an embodiment, the precoding control circuit 245 of the base station 200 may specifically inform the electronic device 120 of a point in time when a precoding matrix is changed. The precoding control circuit 245 may instruct the electronic device 120 to change the precoding matrix based on an occurrence of a certain event. For example, the certain event may include, but is not limited to, the time of receiving a channel state information (CSI) report or the time of receiving a sounding RS. Based on the certain event, the electronic device 120 may determine that the precoding matrix remains the same until the electronic device 120 transmits the CSI report or the sounding RS to the base station 200.

According to an embodiment, the precoding control circuit 245 of the base station 200 may instruct the electronic device 120 on the result of a comparison with an adjacent slot. The precoding control circuit 245 may instruct the electronic device 120 on whether to change the precoding matrix between a previous slot and the current slot and whether to change the precoding matrix between the current slot and a next slot. Various signaling methods to notify that the base station 200 has not changed the precoding matrix are described below.

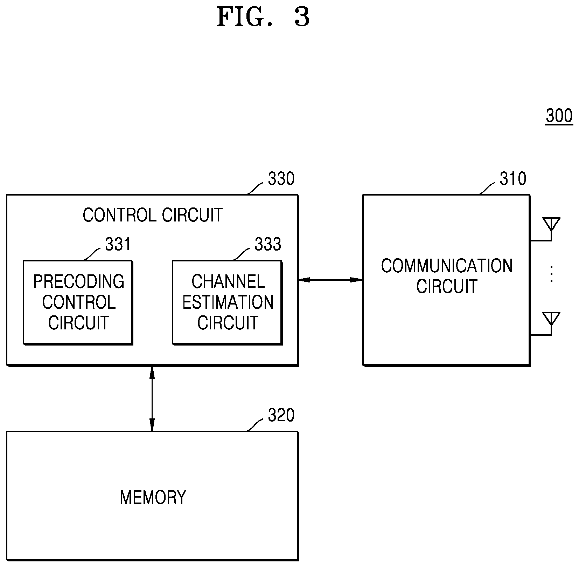

FIG. 3 is a block diagram of an electronic device 300 according to an embodiment.

Referring to FIG. 3, the electronic device 300 may include a communication circuit 310, a memory 320, and a control circuit 330. However, the disclosure is not limited thereto, and as such, according to another embodiment, the electronic device 300 may include one or more additional components, may omit or more components, or may include one or more components combined together. The electronic device 300 of FIG. 3 may correspond to the electronic device 120 of FIG. 1.

The communication circuit 310 may perform functions of transmitting and receiving signals through a wireless channel. For example, the communication circuit 310 performs a conversion function between a baseband signal and a bit string according to the physical layer standard of the system. For example, when transmitting data, the communication circuit 310 may generate complex symbols by encoding and modulating the transmitted bit string. Also, when receiving data, the communication circuit 310 may restore the received bit string by demodulating and decoding the baseband signal. In addition, the communication circuit 310 may upconvert the baseband signal into an RF band signal and then transmit the RF band signal through an antenna or may downconvert the RF band signal received through the antenna into a baseband signal. For example, the communication circuit 310 may include, but is not limited to, a transmission filter, a reception filter, an amplifier, a mixer, an oscillator, a DAC, an ADC, etc. The communication circuit 310 may perform beamforming. The communication circuit 310 may apply beamforming weights to signals to provide directionality to signals to be transmitted and received.

The communication circuit 310 may transmit and receive signals. The communication circuit 310 may receive a downlink signal or transmit an uplink signal. The downlink signal may include an SS, an RS, system information, a configuration message, control information, or downlink data. For example, the communication circuit 310 may receive a downlink physical channel including an RS from a base station (e.g., the base station 110 in FIG. 1). The downlink physical channel may include, but is not limited to, PDSCH, PDCCH, and PBCH.

The memory 320 may store data for operation of the electronic device 300. The data may include, but is not limited to, basic programs, application programs, program code, software instructions, and setting information. The memory 320 may include a volatile memory, a non-volatile memory, or a combination of the volatile memory and the non-volatile memory. Also, the memory 320 may provide the stored data based on a request from the control circuit 330. For example, the memory 320 may provide the stored data in response to a request from the control circuit 330.

The control circuit 330 may control operations of the electronic device 300. For example, the control circuit 330 may control all operations of the electronic device 300. For example, the control circuit 330 may transmit and receive signals through the communication circuit 310. Also, the control circuit 330 may write data to and read data from the memory 320. For example, the control circuit 330 may include at least one processor or microprocessor or may be part of a processor. When the control circuit 330 is part of a processor, part of the communication circuit 310 and the control circuit 330 may be referred to as a communication processor (CP).

According to an embodiment, the control circuit 330 may further include a precoding control circuit 331 and a channel estimation circuit 333. The precoding control circuit 331 may request a base station (e.g., the base station 110 in FIG. 1) to maintain precoding. The precoding maintenance may correspond to a precoding matrix applied to a transmission signal not being changed over a certain interval. The precoding control circuit 331 may be guaranteed an interval in which the precoding matrix is the same between adjacent slots by signaling a certain event or the length of a precoding maintenance interval to the base station 110, and the channel estimation circuit 333 may improve channel estimation performance by interpolating the DMRS channel estimation results of adjacent slots during the interval in which the precoding matrix is the same between the adjacent slots.

For example, the precoding control circuit 331 of the electronic device 300 may request the base station 110 not to change the precoding matrix until a certain event occurs. The certain event may include at least an event in which the electronic device 300 transmits a sounding reference signal (SRS) to the base station 110, or an event in which the electronic device 300 transmits a CSI report to the base station 110. The base station 110 determine that the relevant event has occurs in response to receipt from the electronic device 300 of the SRS or the CSI report. Based on the certain event, the electronic device 300 may determine that the precoding matrix remains the same until the electronic device 300 transmits the CSI report or sounding RS to the base station 110.

According to an embodiment, the precoding control circuit 331 of the electronic device 300 may request the base station 110 not to change the precoding matrix during a certain interval. For example, the certain period may be indicated by any number of slots, number of sub-frames, number of frames, etc. desired by the electronic device 300. Based on the request, the electronic device 300 may expect the precoding matrix to be the same for each slot during the certain period requested from the base station 110. The channel estimation circuit 333 of the electronic device 300 may improve the channel estimation performance of REs of the current slot by interpolating the channel estimation results of DMRSs included in neighboring slots according to the expectation.

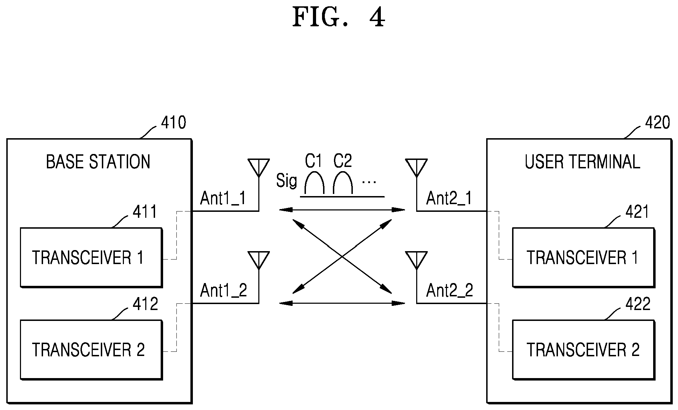

FIG. 4 illustrates a multiple input multiple output (MIMO) environment according to an embodiment.

Referring to FIG. 4, a base station 410 and a user terminal 420 may communicate with each other by using a MIMO method. The base station 410 in FIG. 4 may correspond to the base station 110 in FIG. 1, and the user terminal 420 in FIG. 4 may correspond to the electronic device 120 in FIG. 1.

According to an embodiment, the base station 410 may include a plurality of first antennas Ant1_1 and Ant1_2 and the user terminal 420 may include a plurality of second antennas Ant2_1 and Ant2_2. Although FIG. 4 illustrates that the base station 410 and the user terminal 420 include two first antennas Ant1_1 and Ant1_2 and two second antennas Ant2_1 and Ant2_2, respectively, the disclosure is not limited thereto. As such, according to an embodiment, the technical idea of the inventive concept of the disclosure may be applied to an embodiment in which the base station 410 and the user terminal 420 each include two or more antennas.

The base station 410 may include a first transceiver 411, a second transceiver 412, a first antenna Ant1_1, and a second antenna Ant1_2. The first transceiver 411 and the second transceiver 412 may each be connected to one antenna. For example, the first transceiver 411 may be connected to the first antenna Ant1_1, and the second transceiver 412 may be connected to the second antenna Ant1_2. In an example case in which the base station 410 operates as a transmitting device, the first transceiver 411 and the second transceiver 412 may each operate as a transmitter, and in an example case in which the base station 410 operates as a receiving device, the first transceiver 411 and the second transceiver 412 may each operate as a receiver.

The first transceiver 411 may generate a first signal Sig by merging a first component carrier signal C1 with a second component signal C2 in a transmitting mode and output the generated first signal Sig to the user terminal 420. According to an embodiment, the first transceiver 411 may extract the first component carrier C1 and the second component carrier C2 from the first signal Sig. That is, the first transceiver 411 may extract not only the first component carrier C1 but also the second component carrier C2 from the first signal Sig. Each of the first transceiver 411 and the second transceiver 412 may transmit not only one component carrier signal but also a plurality of component carrier signals by merging the plurality of component carrier signals, and may extract not only one component carrier signal but also a plurality of component carrier signals from the first signal Sig. The user terminal 420 may include a third transceiver 421, a fourth transceiver 422, a third antenna Ant2_1, and a fourth antenna Ant2_2. Because the user terminal 420 may be substantially the same as or similar to the base station 410, descriptions thereof are omitted.

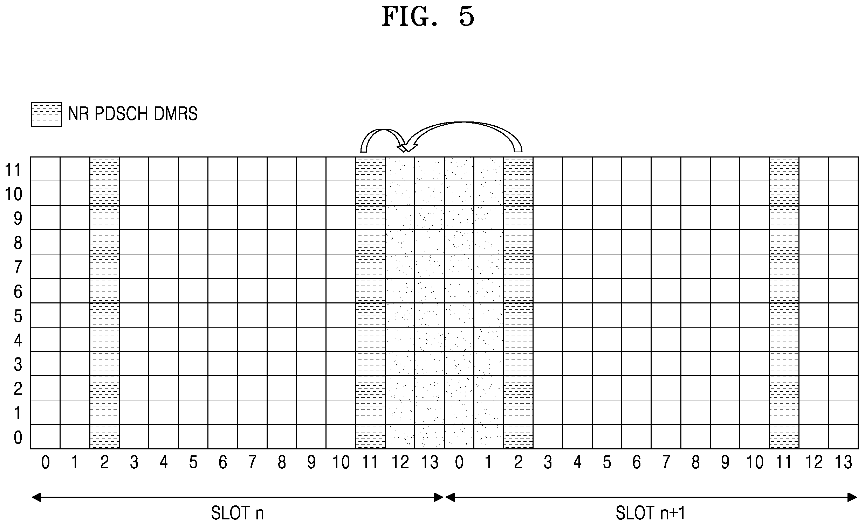

FIG. 5 illustrates an example of channel estimation according to an embodiment.

Referring to FIG. 5, the horizontal axis represents time and the vertical axis represents frequency. The numbers on the horizontal axis are symbol indexes, and the numbers on the vertical axis are sub-carrier indexes. According to an embodiment, in the case of 15 kHz sub-carrier spacing (SCS), 14 symbols may be included per slot. However, the disclosure is not limited to 15 kHz SCS, and may be applied to various numerologies, such as 30 kHz SCS and 60 kHz SCS. The first slot (slot n) and the second slot (slot n+1) constitute one sub-frame, and 12 sub-carriers in the frequency domain may constitute a resource block (RB).

A channel estimation circuit (e.g., the channel estimation circuit 333 in FIG. 3) may perform channel estimation for DMRS. The DMRS may correspond to symbol indexes 2 and 11 of each slot. However, the disclosure is not limited thereto, and as such, according to an embodiment, the location where the DMRS is transmitted may vary depending on an antenna port, a transmission mode, etc.

The channel estimation circuit 333 may perform channel estimation for the resource elements (REs) of the first slot (slot n) and the REs of the second slot (slot n+1). In an example case in which the precoding matrices of the first slot (slot n) and the second slot (slot n+1) are the same, the channel estimation circuit 333 may perform inter-slot interpolation channel estimation for the REs of symbol indices 12 and 13 among the REs of the first slot (slot n) and the REs of symbol indices 0 and 1 among the REs of the second slot (slot n+1). In an example case in which channel estimation is performed for the REs of the symbol indices 12 and 13 of the first slot (slot n) and the REs of the symbol indices 0 and 1 of the second slot (slot n+1), channel estimation may be performed by interpolating the channel estimation results of adjacent DMRSs. The channel estimation circuit 333 may perform channel estimation by interpolating the channel estimation results of the DMRS resource element (RE) corresponding to a symbol index 11 of the first slot (slot n) and the DMRS RE corresponding to a symbol index 2 of the second slot (slot n+1).

According to an embodiment, in an example case in which a base station (e.g., the base station 110 in FIG. 1) signals to maintain precoding (e.g. by transmitting a precoding maintenance signal to the base station) or an electronic device (e.g., the electronic device 120 in FIG. 1) requests the base station 110 to maintain precoding, since the precoding is guaranteed to be the same between neighboring slots (e.g., the first slot (slot n) and the second slot (slot n+1), the channel estimation may be performed by interpolating the channel estimation results of the DMRS without separately determining whether the precoding is the same between the neighboring slots.

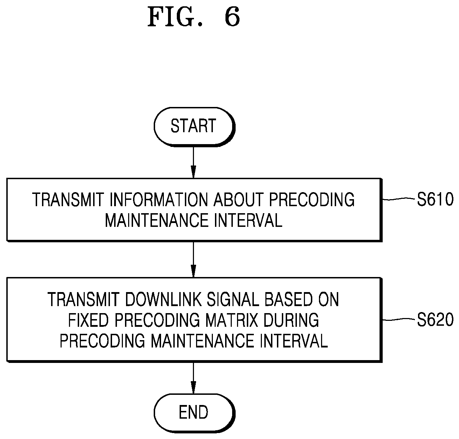

FIG. 6 is a flowchart illustrating an operating method of the base station 200 according to an embodiment.

Referring to FIG. 6, in operation S610, a base station (e.g., the base station 200 of FIG. 2) may transmit information about a precoding maintenance interval. For example, the base station may signal to an electronic device (e.g., the electronic device 300 of FIG. 3) about the precoding maintenance interval (or a precoding change restriction interval). The precoding maintenance interval may include information about the length of an interval in which a precoding matrix is not changed. For example, the precoding maintenance interval may be a natural number less than or equal to m, where m may be the number of symbols per slot according to the current numerology.

According to an embodiment, in an example case in which the unit of the precoding maintenance interval is a slot, the start time of the precoding maintenance interval may be calculated from a slot index 0. For example, the precoding maintenance interval may be p slots. In this case, the precoding matrix may be maintained without change from the slot index 0 to a slot index p-1.

According to an embodiment, in an example case in which the unit of the precoding maintenance interval is a slot, the start time of the precoding maintenance interval may be calculated from the end time of the current slot. For example, the precoding maintenance interval may be p slots. In this example case, the precoding matrix may be maintained without change while the current slot ends and p slots pass from the start of the next slot.

According to an embodiment, the base station 200 may provide information about the precoding maintenance interval to the electronic device 300 through radio resource control (RRC) signaling. The base station 200 may transmit "PrecodingChangeRestrictSlot" as the precoding maintenance interval according to Table 1 below.

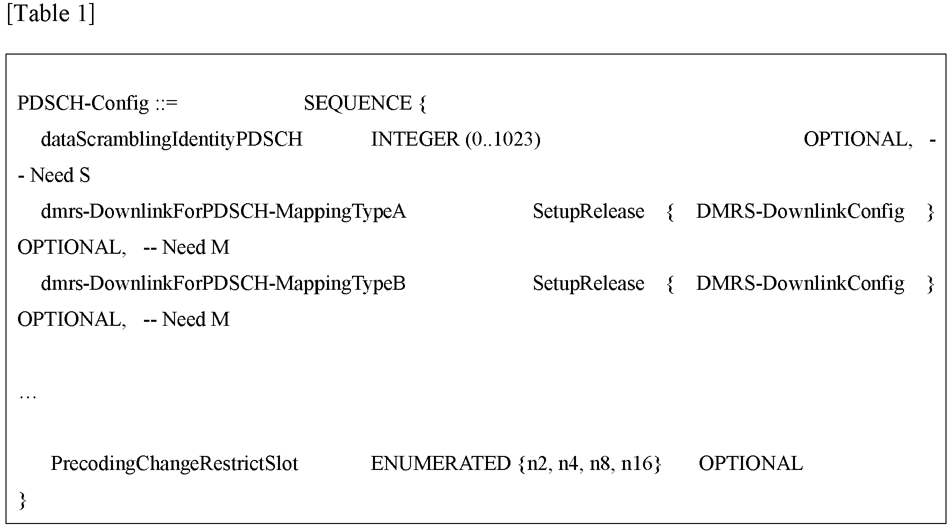

In the embodiment described above, the unit signaled by the base station 200 is described as a slot, but is not limited thereto. According to various embodiments, the unit of an interval requesting precoding maintenance may include, but is not limited to, a slot, a sub-frame, and a frame.

In operation S620, the base station 200 may transmit a downlink signal based on a precoding matrix during the precoding maintenance interval. For example, the base station 200 may transmit the downlink signal based on a fixed precoding matrix during the precoding maintenance interval. The base station 200 may not change the precoding matrix during a time determined by the precoding maintenance interval signaled to the electronic device 300. For example, the base station 200 may receive, from the electronic device 300, a CSI report and/or an SRS indicating a change in a channel environment during the precoding maintenance interval. According to an embodiment, the base station 200 may change the precoding matrix in response to receiving the CSI report and/or the SRS. For example, the base station 200 has to change the precoding matrix based on receiving the CSI report and/or the SRS, but may omit changing the precoding matrix in an example case in which the precoding maintenance interval has not yet ended.

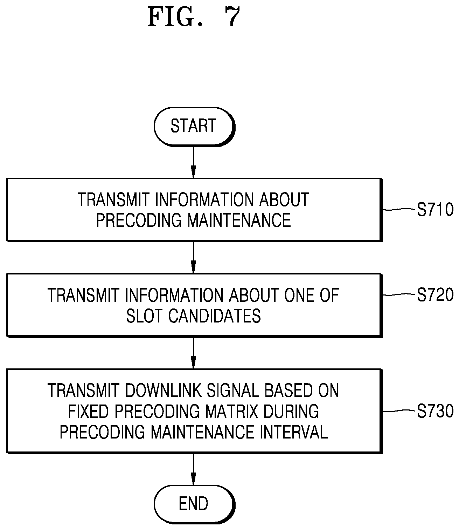

FIG. 7 is a flowchart illustrating an operating method of the base station 200 according to an embodiment.

Referring to FIG. 7, in operation S710, a base station (e.g., the base station 200 of FIG. 2) may transmit information about a precoding maintenance slot candidate. For example, the base station may signal to an electronic device (e.g., the electronic device 300 of FIG. 3) about the precoding maintenance slot candidate. The precoding maintenance slot candidate may include slot numbers for which a precoding matrix will not be changed. For example, the base station 200 may transmit "maxNrofPrecodingChangeRestrictSlot" as the precoding maintenance slot candidate according to Table 2 below.

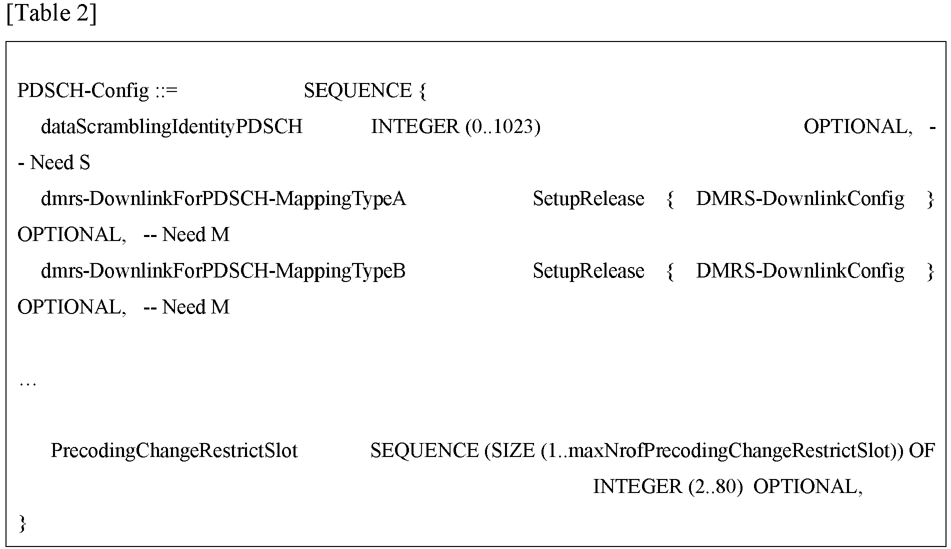

According to an embodiment, the base station 200 may provide information about the precoding maintenance slot candidate to the electronic device 300 through RRC signaling.

**In** operation S720, the base station 200 may transmit information about a selected slot. For example, the base station may signal about the selected slot, which is one of the slot candidates. For example, the base station 200 may select a slot number of any one of integers 2 to 80 of the slot candidates and signal the slot number to the electronic device 300. The signaling may be transmitted through a media access control-control element (MAC-CE) or a downlink control indicator (DCI). The electronic device 300 may identify the length of a slot, in which the precoding matrix remains the same, through a combination of the precoding maintenance slot candidate received through the RRC signaling and the integer signaled through the MAC-CE or the DCI.

In the embodiment described above, the unit signaled by the base station 200 is described as a slot, but is not limited thereto. According to various embodiments, the unit of the precoding maintenance candidate may include, but is not limited to, a slot, a sub-frame, and a frame.

In operation S730, the base station 200 may transmit a downlink signal based on a fixed precoding matrix during the precoding maintenance interval. The precoding maintenance interval may be determined by a combination of the lengths of selected slots transmitted to the electronic device 300 through the MAC-CE or the DCI from among the slot candidates of the RRC signaling transmitted to the electronic device 300. The base station 200 may not change the precoding matrix during a time determined by the precoding maintenance interval signaled to the electronic device 300. For example, the base station 200 may receive, from the electronic device 300, a CSI report and/or an SRS indicating a change in a channel environment during the precoding maintenance interval. According to an embodiment, the base station 200 may change the precoding matrix in response to receiving the CSI report and/or the SRS. For example, the base station 200 has to change the precoding matrix based on receiving the CSI report and/or the SRS, but may omit changing the precoding matrix when the precoding maintenance interval has not yet ended.

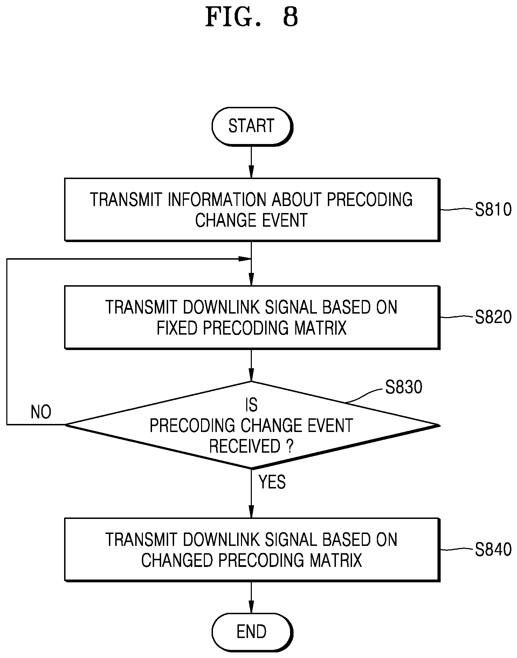

FIG. 8 is a flowchart illustrating an operating method of the base station 200 according to an embodiment.

Referring to FIG. 8, in operation S810, a base station (e.g., the base station 200 of FIG. 2) may transmit information about a precoding change event. For example, the base station may signal to an electronic device (e.g., the electronic device 300 of FIG. 3) about the precoding change event. The precoding change event may be an event indicating a point in time when the base station 200 starts changing a precoding matrix. For example, in the case of codebook-based precoding, the precoding change event may be a CSI report event. According to an embodiment, in the case of SRS-based precoding, the precoding change event may be an SRS transmission event.

According to an embodiment, the base station 200 may provide information about the precoding change event to the electronic device 300 through RRC signaling. The base station 200 may transmit "PrecodingChangeRestrictCSIreport" or "PrecodingChangeRestrictSRStx" according to Table 3 below.

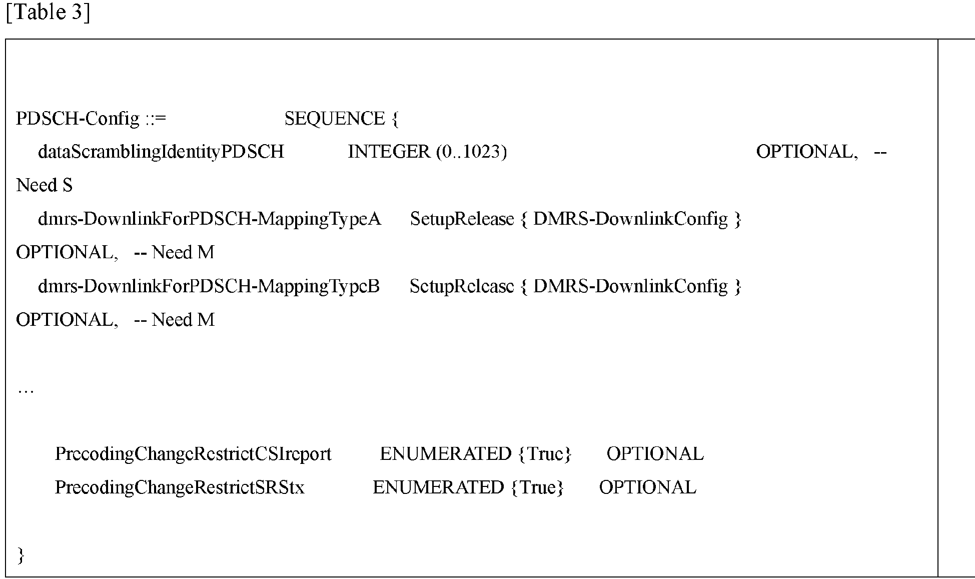

In operation S820, the base station 200 may transmit a downlink signal based on a fixed precoding matrix during the precoding maintenance interval. The precoding maintenance interval may correspond to an interval from a point in time in which RRC signaling for a precoding change event transmitted to the electronic device 300 is transmitted to a point in time in which the precoding change event occurs. In an example case in which the base station 200 RRC-signals "PrecodingChangeRestrictCSIreport" to the electronic device 300 as "True", the precoding maintenance interval may be until a point in time in which the base station 200 receives a CSI report from the electronic device 300. In an example case in which the base station 200 RRC-signals "PrecodingChangeRestrictSRStx" to the electronic device 300 as "True", the precoding maintenance interval may be until a point in time in which the base station 200 receives an SRS from the electronic device 300.

In operation S830, the base station 200 may determine whether a precoding change event is received. As described above, the base station 200 may determine whether a CSI report or an SRS is received from the electronic device 300. In an example case in which the base station 200 does not receive a CSI report or an SRS from the electronic device 300, the base station 200 may determine that the precoding maintenance interval continues and repeatedly perform operation S820. In an example case in which a CSI report or an SRS is received from the electronic device 300, operation S840 may be performed.

In operation S840, the base station 200 may transmit a downlink signal based on a changed precoding matrix. In operation S830, the precoding maintenance interval may end at the time in which the base station 200 receives a CSI report or an SRS from the electronic device 300. Accordingly, the base station 200 may select an optimal precoding matrix for a changed channel situation based on the received CSI report or SRS and transmit a downlink signal based on the optimal precoding matrix.

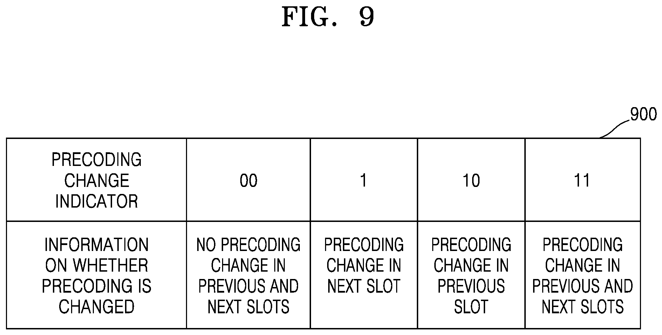

FIG. 9 illustrates an example of a table 900 for indicating precoding changes between adjacent slots according to an embodiment.

Referring to FIG. 9, the table 900 indicates precoding change information between adjacent slots. For example, the precoding change information may include 2 bits, and may be added to DCI format 1_3 according to Table 4 below and transmitted from the base station 200 to the electronic device 300.

**[Table 4]**

| | | |
|---|---|---|
| DCI format 1_3 is used for the scheduling of PDSCH in one cell. | | |
| The following information is transmitted by means of the DCI format 1_3 with CRC scrambled by C-RNTI or CS-RNTI or MCS-C-RNTI: | | |
| | - Identifier for DCI formats - 1 bits | |
| | | - The value of this bit field is always set to 1, indicating a DL DCI format |
| | | - Carrier indicator - 0 or 3 bits as defined in Clause 10.1 of [5, TS 38.213]. |
| | | ... |
| - Precoding change indicator -2 bits | | |

According to an embodiment, in an example case in which the precoding change information is "00", the electronic device 300 may decode the DCI to thereby identify that the precoding matrices of a previous slot (e.g., the (n-1)th slot) and a next slot (e.g., the (n+1)th slot) are the same as the precoding matrix of the current slot (e.g., the nth slot). According to an embodiment, the precoding matrix of the current slot is the same as the precoding matrix of the previous slot, and therefore the electronic device 300 may perform channel estimation for REs of symbol indices 0 and 1 of the current slot by interpolating the DMRS channel estimation results of the previous slot. For example, based on the precoding matrix of the current slot being the same as the precoding matrix of the previous slot, the electronic device 300 may perform channel estimation for REs of symbol indices 0 and 1 of the current slot by interpolating the DMRS channel estimation results of the previous slot. According to an embodiment, the precoding matrix of the current slot is the same as the precoding matrix of the next slot, and therefore the electronic device 300 may perform channel estimation for REs of symbol indices 0 and 1 of the next slot by interpolating the DMRS channel estimation results of the current slot. For example, based on the precoding matrix of the current slot being the same as the precoding matrix of the next slot, the electronic device 300 may perform channel estimation for REs of symbol indices 0 and 1 of the next slot by interpolating the DMRS channel estimation results of the current slot.

According to an embodiment, in an example case in which the precoding change information is "01", the electronic device 300 may decode the DCI to thereby identify that the precoding matrix of the current slot (e.g., the nth slot) is the same as the precoding matrix of the previous slot (e.g., the (n-1)th slot) (i.e., there is no change in the precoding matrix) and identify that the precoding matrix of the current slot is different from the precoding matrix of the next slot (e.g., the (n+1)th slot) (i.e., there is a change in the precoding matrix). According to an embodiment, the precoding matrix of the current slot is the same as the precoding matrix of the previous slot, and therefore, the electronic device 300 may perform channel estimation for the REs of the symbol indices 0 and 1 of the current slot by interpolating the DMRS channel estimation result of the previous slot. For example, based on the precoding matrix of the current slot being the same as the precoding matrix of the previous slot, the electronic device 300 may perform channel estimation for the REs of the symbol indices 0 and 1 of the current slot by interpolating the DMRS channel estimation result of the previous slot. According to an embodiment, the precoding matrix of the current slot is different from the precoding matrix of the next slot, and therefore the electronic device 300 may not use the DMRS channel estimation result of the current slot and perform channel estimation for the REs of the symbol indices 0 and 1 of the next slot. For example, based on the precoding matrix of the current slot being different from the precoding matrix of the next slot, the electronic device 300 may not use the DMRS channel estimation result of the current slot and perform channel estimation for the REs of the symbol indices 0 and 1 of the next slot.

According to an embodiment, in an example case in which the precoding change information is "10", the electronic device 300 may decode the DCI to thereby identify that the precoding matrix of the current slot (e.g., the nth slot) is different from the precoding matrix of the previous slot (e.g., the (n-1)th slot) (i.e., there is a change in the precoding matrix) and identify that the precoding matrix of the current slot is the same as the precoding matrix of the next slot (e.g., the (n+1)th slot) (i.e., there is no change in the precoding matrix). According to an embodiment, the precoding matrix of the current slot is different from the precoding matrix of the previous slot, and therefore the electronic device 300 may perform channel estimation for the REs of the symbol indices 0 and 1 of the current slot without interpolation of the DMRS channel estimation result of the previous slot. For example, based on the precoding matrix of the current slot being different from the precoding matrix of the previous slot, the electronic device 300 may perform channel estimation for the REs of the symbol indices 0 and 1 of the current slot without interpolation of the DMRS channel estimation result of the previous slot. According to an embodiment, the precoding matrix of the current slot is the same as the precoding matrix of the next slot, and therefore the electronic device 300 may perform channel estimation for the REs of the symbol indices 0 and 1 of the next slot by interpolating the DMRS channel estimation result of the current slot. For example, based on the precoding matrix of the current slot being the same as the precoding matrix of the next slot, and therefore the electronic device 300 may perform channel estimation for the REs of the symbol indices 0 and 1 of the next slot by interpolating the DMRS channel estimation result of the current slot.

According to an embodiment, in an example case in which the precoding change information is "11", the electronic device 300 may decode the DCI to thereby identify that the precoding matrix of the current slot (e.g., the nth slot) is different from the precoding matrix of the previous slot (e.g., the (n-1)th slot) (i.e., there is a change in the precoding matrix) and identify that the precoding matrix of the current slot is also different from the precoding matrix of the next slot (e.g., the (n+1)th slot) (i.e., there is a change in the precoding matrix). According to an embodiment, the precoding matrix of the current slot is different from all the precoding matrices of adjacent slots, and therefore the electronic device 300 may perform channel estimation for REs without using the DMRS channel estimation result of the current slot. For example, the precoding matrix of the current slot being different from all the precoding matrices of adjacent slots, the electronic device 300 may perform channel estimation for REs without using the DMRS channel estimation result of the current slot.

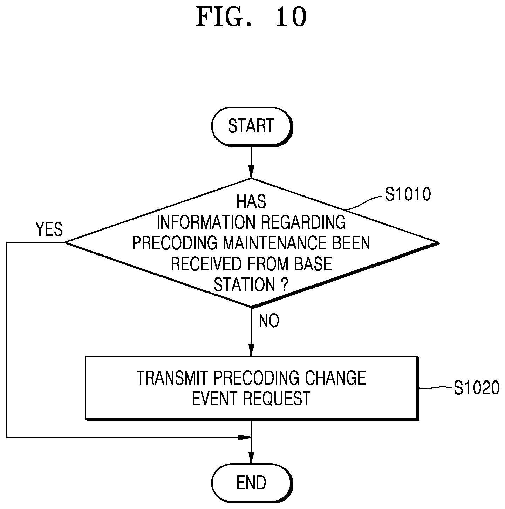

FIG. 10 is a flowchart illustrating an operating method of the electronic device 300 according to an embodiment.

Referring to FIG. 10, in operation S1010, an electronic device (e.g., the electronic device 300 of FIG. 3) may determine whether information regarding precoding maintenance has been received from a base station (e.g., the base station 200 of FIG. 2). For example, the electronic device may determine whether a signaling regarding precoding maintenance has been received from the base station. The signaling regarding precoding maintenance may include at least one of a precoding maintenance interval indicating that the base station 200 will not change the precoding matrix for a certain interval, a precoding change event indicating that the base station 200 will not change the precoding matrix until a certain event occurs, and a signaling regarding a change of the precoding matrix between adjacent slots. In an example case in which the signaling regarding precoding maintenance is received from the base station 200, the base station 200 may already maintain the same precoding matrix without changing the precoding matrix in real time based on the signaling. Therefore, the electronic device 300 may terminate the procedure.

In operation S1020, the electronic device 300 may transmit a precoding change event request. For example, the electronic device 300 may signal the precoding change event request. The precoding change event request may correspond to requesting the base station 200 to restrict changes to the precoding matrix until a precoding change event occurs. For example, the precoding change event request may be a request from the electronic device 300 to the base station 200 to change the precoding matrix only based on an event of transmitting a CSI report or SRS.

According to an embodiment, the electronic device 300 may provide the precoding change event request to the base station 200 through UE capability signaling. For example, the electronic device 300 may transmit "supportedPrecodingChangeRestrict" as the precoding change event request according to Table 5 below.

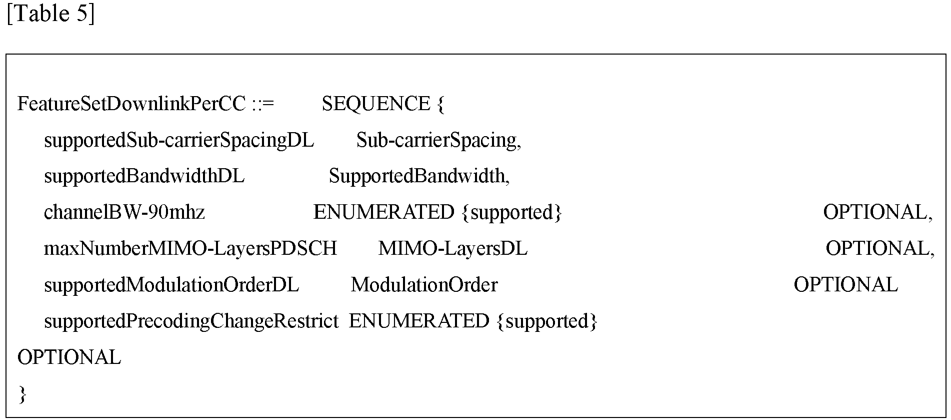

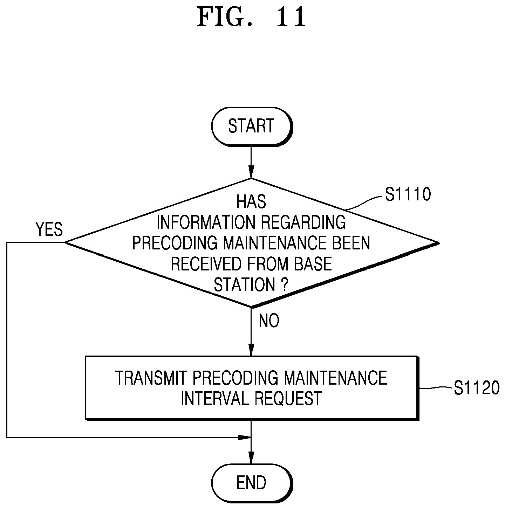

FIG. 11 is a flowchart illustrating an operating method of the electronic device 300 according to an embodiment.

Referring to FIG. 11, in operation S1110, an electronic device (e.g., the electronic device 300 of FIG. 3) may determine whether information (i.e. a precoding maintenance signal) regarding precoding maintenance has been received from a base station (e.g., the base station 200 of FIG. 2). For example, the electronic device may determine whether a signaling regarding precoding maintenance (i.e. a precoding maintenance signal) has been received from the base station. The signaling regarding precoding maintenance may include at least one of a precoding maintenance interval indicating that the base station 200 will not change the precoding matrix for a certain interval, a precoding change event indicating that the base station 200 will not change the precoding matrix until a certain event occurs, and a signaling regarding a change of the precoding matrix between adjacent slots. In an example case in which the signaling regarding precoding maintenance is received from the base station 200, the base station 200 may already maintain the same precoding matrix without changing the precoding matrix in real time based on the signaling. Therefore, the electronic device 300 may terminate the procedure.

In operation S1120, the electronic device 300 may transmit a precoding maintenance interval request. For example, the electronic device 300 may signal the precoding maintenance interval request. The precoding maintenance interval request may correspond to requesting the base station 200 to restrict changes to the precoding matrix during an interval indicated by the precoding maintenance interval request. For example, the precoding maintenance interval request may be a request from the electronic device 300 to the base station 200 not to change the precoding matrix during an interval corresponding to any number of slots.

According to an embodiment, the electronic device 300 may provide the precoding maintenance interval request to the base station 200 through UE capability signaling. For example, the electronic device 300 may transmit "supportedPrecodingChangeRestrictSlotDL" as the precoding maintenance interval request according to Table 6 below

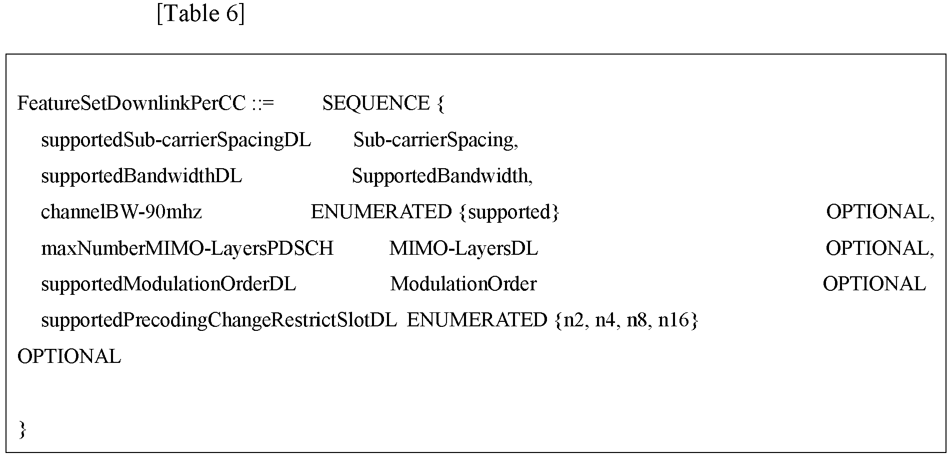

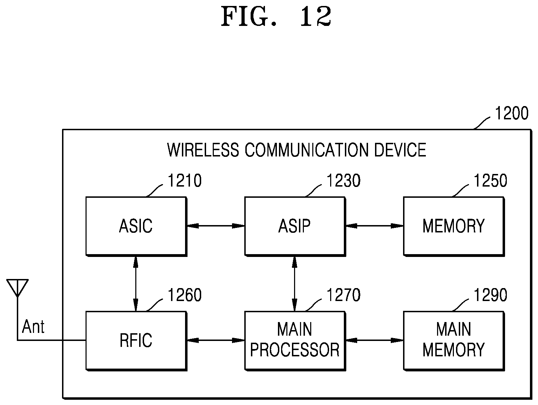

FIG. 12 is a block diagram of a wireless communication device 1200 according to an embodiment.

Referring to FIG. 12, the wireless communication device 1200 may include an application specific integrated circuit (ASIC) 1210, an application specific instruction set processor (ASIP) 1230, a memory 1250, a radio frequency integrated circuit (RFIC) 1260, a main processor 1270, and a main memory 1290. However, the disclosure is not limited thereto, and as such, according to an embodiment, the wireless communication device 1200 may include one or more components other than the components illustrated in FIG. 12. According to an embodiment, one or more components may be omitted or combined. According to an embodiment, the wireless communication device 1200 may include a modem. The modem may include the ASIC 1210, the ASIP 1230, the memory 1250, the RFIC 1260, and the main processor 1270. The wireless communication device 1200 of FIG. 12 may include the electronic device 120 according to an embodiment.

The RFIC 1260 may be connected to an antenna Ant. The RFIC 1260 may be configured to receive signals from outside through the antenna Ant, or transmit signals to the outside through the antenna Ant. According to an embodiment, the RFIC 1260 may receive and transmit signals using a wireless communication network. The ASIP 1230 may include an integrated circuit customized for a specific purpose and may support a dedicated instruction set for a specific application and execute instructions of the instruction set. The memory 1250 may communicate with the ASIP 1230 and store a plurality of instructions executed by the ASIP 1230 as a non-transitory storage device. For example, the memory 1250 may include, as non-limiting examples, any type of memory accessible by the ASIP 1230. For example, the memory 1250 may include, but is not limited to, random access memory (RAM), read only memory (ROM), tape, a magnetic disc, an optical disc, a volatile memory, a non-volatile memory, and a combination thereof.

The main processor 1270 may control the wireless communication device 1200 by executing a plurality of instructions. For example, the main processor 1270 may be configured to perform one or more operations of the wireless communication device 1200 by executing the plurality of instructions. For example, the main processor 1270 may control the ASIC 1210 and the ASIP 1230 and may process data received through a wireless communication network or process a user input to the wireless communication device 1200. The main memory 1290 may communicate with the main processor 1270 and store a plurality of instructions executed by the main processor 1270 as a non-transitory storage device. For example, the main memory 1290 may include, as non-limiting examples, any type of memory accessible by the main processor 1270, such as RAM, ROM, tape, a magnetic disc, an optical disc, a volatile memory, a non-volatile memory, and a combination thereof.

While the inventive concept has been particularly shown and described with reference to embodiments thereof, it will be understood that various changes in form and details may be made therein without departing from the scope of the following claims.

### ANNEX A

The present invention can also be defined by reference to the following clauses:
Clause 1. An electronic device (120; 300) comprising:
   a communication circuit (310) configured to receive a physical channel from a base station (110; 200);
   a memory (230) storing at least one instruction; and
   at least one processor (240),
   wherein when executed by the at least one processor (240), the at least one instruction is configured to control the electronic device (120; 200) to:
      receive from the base station (110; 200) a precoding change restriction, wherein the precoding change restriction corresponds to maintaining the precoding matrix applied by the base station (110; 300) for a first interval;
      receive from the base station (110; 200), a downlink signal based on the precoding matrix during the first interval based on the precoding change restriction; and
      based on the precoding change restriction, perform channel estimation for a current slot transmitted during the precoding maintenance interval based on demodulation reference signals (DMRS) belonging to a further slot adjacent to the first slot and also transmitted during the first interval.
Clause 2. The electronic device (120; 300) of claim 1, wherein the precoding change restriction comprises one of a precoding change event or a length of a precoding change restriction interval.
Clause 3. The electronic device (120; 300) of claim 2, wherein the precoding change restriction is transmitted to the base station (110; 200) through user equipment (UE) capability signaling.
Clause 4. The electronic device (120; 300) of claim 2 or claim 3, wherein the precoding change event corresponds to a point in time of reception of a channel state information (CSI) report or a sounding reference signal (SRS) of the base station (110; 200).
Clause 5. The electronic device (120; 300) of any preceding claim, wherein the at least one processor (240) is configured to perform channel estimation for a resource element of the current slot by interpolating a channel estimation result of a demodulation reference signal (DMRS) of the further slot during the first interval corresponding to the precoding change restriction request.
Clause 6. A base station (110; 200) comprising:
   a communication circuit (210) configured to transmit a physical channel to an electronic device (120; 300);
   a memory (230) storing at least one instruction; and
   at least one processor (240),
   wherein when executed by the at least one processor (240), the at least one instruction is configured to control the base station (110; 200) to:
      receive a precoding change restriction request from the electronic device (120; 300);
      transmit a downlink signal based on a precoding matrix during a precoding maintenance interval based on the precoding change restriction,
   wherein the precoding change restriction corresponds to maintaining the precoding matrix applied by the base station (110; 300) for a first interval.
Clause 7. The base station (110; 200) of clause 6, wherein the precoding change restriction request comprises one of a precoding change event or a length of a precoding maintenance interval.
Clause 8. The base station (110; 200) of clause 7, wherein the precoding change event is transmitted to the electronic device (120; 300) through a radio resource control (RRC) signaling, a media access control-control element (MAC-CE), or a downlink control indicator (DCI).
Clause 9. The base station (110; 200) of clause 7 or clause 8, wherein the precoding change event corresponds to a point in time of reception of a channel state information (CSI) report or a sounding reference signal (SRS) of the base station (110; 200).
Clause 10. The base station (110; 200) of any of clause 7 to 9, wherein the length of the precoding maintenance interval is signaled as a number of change restriction slots or a slot length candidate.
Clause 11. The base station (110; 200) of clause 10, wherein the length of the precoding maintenance interval is signaled as the number of change restriction slots, and
   wherein the number of change restriction slots is transmitted to the electronic device (120; 300) through RRC signaling.
Clause 12. The base station (110; 200) of clause 10, wherein, the length of the precoding maintenance interval is signaled as the slot length candidate, and
   wherein the slot length candidate is transmitted to the electronic device (120; 300) through RRC signaling.
Clause 13. The base station (110; 200) of clause 12, wherein the at least one processor (240) is further configured to transmit a slot length of one of a plurality of slot length candidates to the electronic device (120; 300), and
   wherein the slot length is signaled through a media access control-control element (MAC-CE), or a downlink control indicator (DCI).
Clause 14. The base station (110; 200) of any of clauses 6 to 13, wherein the at least one processor (240) is further configured to provide the electronic device (120; 300) with adjacent slot change information comprising whether a precoding matrix is changed between a previous slot and a current slot and whether a precoding matrix is changed between the current slot and a next slot.
Clause 15. The base station (110; 200) of clause 14, wherein the adjacent slot change information is transmitted to the electronic device (120; 300) through a downlink control indicator (DCI).

## Claims

1. An electronic device (120; 300) comprising:
a communication circuit (310) configured to receive a physical channel from a base station (110; 200);
a memory (230) storing at least one instruction; and
at least one processor (240),
wherein when executed by the at least one processor (240), the at least one instruction is configured to control the electronic device (120; 200) to:
determine whether a precoding maintenance signal is received from the base station (110; 200), and
based on a determination that the precoding maintenance signal is not received, transmit a precoding change restriction request to the base station (110; 200),
wherein the precoding change restriction request corresponds to a request to maintain a precoding matrix applied by the base station (110; 200) for a first interval.

2. The electronic device (120; 300) of claim 1, wherein the precoding change restriction request comprises one of a precoding change event or a length of a precoding change restriction interval.

3. The electronic device (120; 300) of claim 2, wherein the precoding change restriction request is transmitted to the base station (110; 200) through user equipment (UE) capability signaling.

4. The electronic device (120; 300) of claim 2 or claim 3, wherein the precoding change event corresponds to a point in time of reception of a channel state information (CSI) report or a sounding reference signal (SRS) of the base station (110; 200).

5. The electronic device (120; 300) of any preceding claim, wherein the at least one processor (240) is further configured to perform channel estimation for a resource element of a current slot by interpolating a channel estimation result of a demodulation reference signal (DMRS) of an adjacent slot during the first interval corresponding to the precoding change restriction request.

6. A base station (110; 200) comprising:
a communication circuit (210) configured to transmit a physical channel to an electronic device (120; 300);
a memory (230) storing at least one instruction; and
at least one processor (240),
wherein when executed by the at least one processor (240), the at least one instruction is configured to control the base station (110; 200) to:
transmit a precoding change restriction to the electronic device (120; 300), and
transmit a downlink signal based on a precoding matrix during a precoding maintenance interval based on the precoding change restriction,
wherein the precoding change restriction corresponds to maintaining the precoding matrix applied by the base station (110; 300) for a first interval.

7. The base station (110; 200) of claim 6, wherein the precoding change restriction comprises one of a precoding change event or a length of a precoding maintenance interval.

8. The base station (110; 200) of claim 7, wherein the precoding change event is transmitted to the electronic device (120; 300) through a radio resource control (RRC) signaling, a media access control-control element (MAC-CE), or a downlink control indicator (DCI).

9. The base station (110; 200) of claim 7 or claim 8, wherein the precoding change event corresponds to a point in time of reception of a channel state information (CSI) report or a sounding reference signal (SRS) of the base station (110; 200).

10. The base station (110; 200) of any of claims 7 to 9, wherein the length of the precoding maintenance interval is signaled as a number of change restriction slots or a slot length candidate.

11. The base station (110; 200) of claim 10, wherein the length of the precoding maintenance interval is signaled as the number of change restriction slots, and
wherein the number of change restriction slots is transmitted to the electronic device (120; 300) through RRC signaling.

12. The base station (110; 200) of claim 10, wherein, the length of the precoding maintenance interval is signaled as the slot length candidate, and
wherein the slot length candidate is transmitted to the electronic device (120; 300) through RRC signaling.

13. The base station (110; 200) of claim 12, wherein the at least one processor (240) is further configured to transmit a slot length of one of a plurality of slot length candidates to the electronic device (120; 300), and
wherein the slot length is signaled through a media access control-control element (MAC-CE), or a downlink control indicator (DCI).

14. The base station (110; 200) of any of claims 6 to 13, wherein the at least one processor (240) is further configured to provide the electronic device (120; 300) with adjacent slot change information comprising whether a precoding matrix is changed between a previous slot and a current slot and whether a precoding matrix is changed between the current slot and a next slot.

15. The base station (110; 200) of claim 14, wherein the adjacent slot change information is transmitted to the electronic device (120; 300) through a downlink control indicator (DCI).
